# EUROPÄISCHE PATENTANMELDUNG

(11) **EP 1 359 517 A1**
(43) Veröffentlichungstag der Anmeldung: **05.11.2003**
(21) Anmeldenummer: 02009751.5
(22) Anmeldetag: 30.04.2002
(51) Int. Cl.: G06F 17/30

(54) **Vorrichtung und Verfahren zum Bereitstellen von Bildinformationen über ein Netzwerk**

(71) Anmelder: Agfa-Gevaert AG, 51373 Leverkusen (DE)
(72) Erfinder: Fuchsberger, Hermann, 85737 Ismaning (DE)

(57) **Zusammenfassung**

Es werden eine Vorrichtung (WA) und ein Verfahren zum Bereitstellen von Bildinformationen, die mehreren Aufträgen (X1,X2,Y1,Y2,Y3,Z1) eines Kunden (CU) zugeordnet sind, über ein Netzwerk (N1,N2) beschrieben. Dabei sind ein Speichermittel (SP) zum Speichern der Bildinformationen der Aufträge (X1,X2,Y1,Y2,Y3,Z1) und ein erstes Empfangsmittel zum Empfangen einer Anfrage (A1) zum Abrufen wenigstens eines Auftrages (X1,X2,Y1,Y2,Y3,Z1) vorhanden, wobei dem ersten Empfangsmittel eine erste Netzwerkadresse zugeordnet ist. Auf erste Bildinformationen wird mittels eines Steuermittels (SM) auf Grund der von dem ersten Empfangsmittel empfangenen Anfrage (A1) zugegriffen. Mittels eines zweiten Empfangsmittels wird eine Anfrage (A2) zum Abrufen wenigtens eines Auftrages (X1,X2,Y1,Y2,Y3,Z1) empfangen, wobei dem zweiten Empfangsmittel eine zweite Netzwerkadresse zugeordnet ist. Auf Grund der von dem zweiten Empfangsmittel empfangenen Anfrage (A2) wird mittels des Steuermittels (SM) auf zweite Bildinformationen zugegriffen. Dabei umfassen die ersten Bildinformationen die zweiten Bildinformationen.

## Beschreibung

Die vorliegende Erfindung betrifft eine Vorrichtung und ein Verfahren zum Bereitstellen von Bildinformationen über ein Netzwerk gemäß dem Oberbegriff des Anspruch 1 bzw. des Anspruch 8.

Ein solche Vorrichtung und ein solches Verfahren sind aus der US 5,760,916 bekannt. In dieser Patentschrift wird ein zentrales Web-Album beschrieben, an das mehrere Photofinishing-Labore angeschlossen sind. Ein Kunde kann einen fotografischen Auftrag, z. B. einen fotografischen Film, an eines der Photofinishing-Labore schicken. Die Bilder des Filmes werden in dem Labor gescannt, so dass digitale Bilddaten entstehen, die den einzelnen Bildern des gescannten Filmes zugeordnet sind. Den digitalen Bilddaten des fotografischen Auftrages wird eine spezifische Identifikation zugeteilt. Das Labor übermittelt anschließend die digitalen Bilddaten des Auftrages zu dem Web-Album. Im Web-Album werden die digitalen Bilddaten unter der spezifischen Identifikation abgespeichert. Der Kunde kann über eine Telekommunikationsverbindung auf die in dem zentralen Web-Album abgespeicherten digitalen Bilddaten zugreifen. Nach Aufbau einer Verbindung zwischen dem Kunden und dem Web-Album gibt der Kunde die spezifische Identifikation für seinen bestimmten fotografischen Auftrag ein und übermittelt diese zum Web-Album. Nach einer Überprüfung der Legitimation des Kunden werden die digitalen Bilddaten von dem Web-Album zu dem Kunden übertragen. Bei dem bekannten System kann der Kunde seinen fotografischen Auftrag an irgendeines der an das Web-Album angeschlossenen Photofinishing-Labore übermitteln. Auf jeden Fall kann er seine digitalen Bilddaten, unabhängig davon, bei welchem Photofinishing-Labor er seinen fotografischen Auftrag plaziert hat, bei dem zentralen Web-Album abrufen. Er muss sich insofern nicht merken, welchen Auftrag er bei welchem Labor abgegeben hat. Er wählt die Netzwerkadresse des Web-Albums an und kann über die ihm zuvor übermittelte spezifische Identifkation des fotografischen Auftrages auf die digitalen Bilddaten des jeweiligen fotografischen Auftrages zugreifen. Unabhängig davon, welches Labor den Auftrag des Kunden verarbeitet hat, greift der Kunde immer auf die gleiche Netzwerkadresse, nämlich die des Web-Albums, zu. Dabei ist es für die Labore nur schwer möglich, eigene Kundenbeziehungen zu pflegen, wie es in dem Fall möglich ist, in dem das jeweilige Labor ein eigenes, proprietäres Web-Album unterhält. Dieses proprietäre Web-Album ist für den Kunden unter einer eigenen Netzwerkadresse erreichbar. Die von dem jeweiligen Labor verarbeiteten digitalen Bilddaten von Aufträgen des Kunden sind über das proprietäre Web-Album verfügbar.

Es ist die Aufgabe der vorliegenden Erfindung die Flexibilität des Kunden und der Photofinishing-Labore beim Bereitstellen von Bildinformationen auf technisch einfache Weise zu erhöhen.

Diese Aufgabe wird gemäß der technischen Lehre des Anspruchs 1 oder des Anspruchs 8 gelöst.

Gemäß der vorliegenden Erfindung sind zwei Empfangsmittel zum Empfangen einer Anfrage zum Abruf von in einem Speicher gespeicherten Bildinformationen vorhanden. Die beiden Empfangsmittel sind über ein Netzwerk mittels zweier unterschiedlicher Netzwerkadressen zugänglich. Abhängig davon, von welchem Empfangsmittel die Anfrage zum Abruf der Bildinformationen empfangen werden, greift ein Steuermittel auf unterschiedliche, in dem Speicher abgespeicherte Daten zu. Die Bildinformationen, auf die auf Grund der von dem ersten Empfangsmittel empfangenen Anfrage zugegriffen wird, enthalten dabei diejenigen Bildinformationen, auf die auf Grund der von dem zweiten Empfangsmittel empfangenen Anfrage zugegriffen wird. Darüber hinaus können diejenigen Bildinformationen, auf die auf Grund der von dem ersten Empfangsmittel empfangenen Anfrage zugegriffen wird, noch weitere Bildinformationen umfassen. Die Bildinformationen sind verschiedenen Aufträgen eines Kunden zugeordnet. Diese Aufträge können insbesondere fotografische Aufträge, wie beispielsweise das Anfertigen von fotografischen Bildern von einem Negativfilm, sein. Die Bildinformationen können z. B. digitale Bilddaten von einzelnen Bildern, bestimmte Bezeichnungen für die jeweiligen Aufträge des Kunden, oder andere Dinge enthalten.

Die Anfragen zum Abrufen wenigstens eines Auftrages, die von dem ersten und/oder zweiten Empfangsmittel empfangen werden, können insbesondere von dem Kunden durchgeführt werden. Der Kunde kann dabei über das Netzwerk, z. B. von seinem privaten Computer, eine Telekommunikationsverbindung zu der erfindungsgemäßen Vorrichtung aufbauen. Über diese Verbindung kann er dann eine Anfrage zum Abrufen wenigstens eines Auftrages an die Vorrichtung übermitteln. Abhängig davon, über welche Netzwerkadresse er sich an die erfindungsgemäße Vorrichtung wendet, bekommt er mehr oder weniger Bildinformationen bereitgestellt. Wendet er sich an die dem ersten Empfangsmittel zugeordnete Netzwerkadresse so bekommt er mehr Bildinformationen bereitgestellt, als wenn er sich an die dem zweiten Empfangmittel zugeordnete Netzwerkadresse wendet.

In einer vorteilhaften Ausgestaltung der Erfindung ist die Vorrichtung mit mehreren Bildverarbeitungseinrichtungen zum Verarbeiten von Aufträgen des Kunden verbunden. Dieses Verbundensein kann insbesondere über das Netzwerk erfolgen. Diese Bildverarbeitungseinrichtungen dienen dabei zum Verarbeiten der ihnen von dem Kunden übermittelten Aufträge. Sie können dabei insbesondere digitale Bilddaten der in dem Auftrag enthaltenen Bilder erzeugen. Über die Verbindung zu der erfindungsgemäßen Vorrichtung können die Bildverarbeitungseinrichtungen nach dem Verarbeiten der Kundenaufträge Bildinformationen, insbesondere digitale Bilddaten, zu der erfindungsgemäßen Vorrichtung übermitteln.

In einer weiteren, besonders vorteilhaften Ausgestaltung der Erfindung ist das erste Empfangsmittel mehreren Bildverarbeitungseinrichtungen und das zweite Empfangsmittel einer der mehreren Bildverarbeitungseinrichtungen zugeordnet. Dabei können einem Kunden, der über das erste Empfangsmittel eine Anfrage zum Abrufen wenigstens eines Auftrages an die erfindungsgemäße Vorrichtung übermittelt, alle diejenigen Aufträge bereitgestellt werden, die von den an die erfindungsgemäße Vorrichtung angeschlossenen Bildverarbeitungseinrichtungen verarbeitet wurden. Übermittelt der Kunde eine Anfrage zum Abrufen wenigstens eines Auftrages an das zweite Empfangsmittel der erfindungsgemäßen Vorrichtung, so werden diesem Kunden alle diejenigen Aufträge bereitgestellt, die von derjenigen Bildverarbeitungeinrichtung verarbeitet wurden, die dem zweiten Empfangsmittel zugeordnet ist. Der Kunde kann sich z. B. unter seiner spezifischen Benutzer-Kennung in die erfindungsgemäße Vorrichtung einloggen und anschließend können ihm, sofern dieses Einloggen über das erste Empfangsmittel geschieht, alle seine Aufträge bereitgestellt werden. Loggt sich der Kunde unter seiner Benutzer-Kennung über das zweite Empfangsmittel in die erfindungsgemäße Vorrichtung ein, so werden ihm nur bestimmte Aufträge bereitgestellt, nämlich diejenigen Aufträge, die von einer bestimmten Bildverarbeitungseinrichtung verarbeitet wurden, die dem zweiten Empfangsmittel zugeordnet ist. Bei dieser Ausgestaltung der Erfindung ist es für die bestimmte Bildverarbeitungseinrichtung vorteilhafterweise möglich, eine möglichst eingängige und kennzeichnende Netzwerkadresse zu wählen, die von derjenigen unterschiedlich ist, die dem ersten Empfangsmittel zugeordnet ist und unter der die Bildverarbeitungseinrichtung eigene Kontakte zu Kunden besser pflegen kann.

Es ist auch möglich, dass der Kunde an Stelle oder zusätzlich zu seiner Benutzer-Kennung eine Identifikation für einen bestimmten Auftrag an die erfindungsgemäße Vorrichtung übermittelt. In diesem Fall können ihm automatisch nicht nur Bildinformationen über den Auftrag bereitgestellt werden, dessen Identifikation er eingegeben hat, sondern zusätzlich Bildinformationen über alle weiteren Aufträge, die von allen angeschlossenen Bildverarbeitungseinrichtungen (im Falle einer Übermittlung der Anfrage an das erste Empfangsmittel) oder aber nur diejenigen Aufträge bereitgestellt werden, die von einer der Bildverarbeitungseinrichtungen verarbeitet wurden (im Falle einer Übermittlung der Anfrage an das zweite Empfangsmittel).

In einer weiteren vorteilhaften Ausgestaltung der Erfindung ist ein gemeinsamer Speicher vorhanden, in dem Bildinformationen abgespeichert werden können, die mehreren Aufträgen zugeordnet sind, wobei diese Aufträge von verschiedenen Bildverarbeitungsvorrichtungen bearbeitet wurden. Auf diese Weise können von dem Kunden angefragte Bildinformationen eines Auftrages schnell und effektiv bereitgestellt werden. Aufwändige Übermittlungen von Bildinformationen, insbesondere über Netzwerk, können dadurch weitgehend vermieden werden. Eine Verwaltung der Bildinformationen in dem gemeinsamen Speicher ist auf einfache Weise möglich.

In einer weiteren vorteilhaften Ausgestaltung enthält das Steuermittel ein erstes und ein zweites Abrufmittel zum Abrufen von Bildinformationen aus dem Speichermittel. Das Abrufen der Bildinformationen mittels des ersten Abrufmittels erfolgt dabei mit Hilfe erster Bedingungen und das Abrufen von Bildinformationen mittels des zweiten Abrufmittels mit Hilfe zweiter Bedingungen. Die ersten Bedingungen werden dann eingesetzt, wenn die Anfrage zum Abrufen eines Auftrages von dem ersten Empfangsmittel empfangen wurde. Die zweiten Bedingungen werden dann eingesetzt, wenn die Anfrage zum Abrufen eines Auftrages von dem zweiten Empfangsmittel empfangen wird. Die ersten und zweiten Bedingungen könne eine Art Filter darstellen, die dazu dienen, die gewünschten Bildinformationen der angefragten Aufträge aus der Vielzahl der Bildinformationen, die in dem Speichermittel abgespeichert sind, heraus zu filtern. Ein Bereitstellen der Bildinformationen ist somit auf besonders einfache Weise realisierbar.

Die zweiten Bedingungen können die ersten Bedingungen umfassen. Dies bedeutet, das die zweiten Bedingungen zusätzlich zu den ersten Bedingungen noch weitere Bedingungen enthalten. Bestimmte Bildinformationen, die auf Grund der ersten Bedingungen bereitgestellt werden können, werden somit bei Verwendung der zweiten Bedingungen nicht bereitgestellt. Die Bildinformationen, die somit auf Grund der zweiten Bedingungen ermittelt werden können, sind gegenüber den Bildinformationen, die mittels der ersten Bedingungen ermittelt werden können, eingeschränkt.

Auf besonders einfache Weise ist das Bereitstellen von Bildinformationen dadurch möglich, dass die ersten und die zweiten Bedingungen Zeiger enthalten, die auf bestimmte Adressen des Speichermittels weisen. Dadurch ist ein schneller Zugriff auf die gewünschten Bildinformationen möglich. Allerdings muss die Speichermittelverwaltung dann so organisiert sein, dass sie die Bildinformationen in einer besonderen Reihenfolge in dem Speichermittel ablegt.

Im Folgenden werden die Erfindung und ihre Vorteile an Hand von Ausführungsbeispielen und den Zeichnungen beschrieben.

Es zeigen:
- Fig. 1: Eine schematische Darstellung eines ersten Ausführungsbeispiels der erfindungsgemäßen Vorrichtung,
- Fig. 2: eine schematische Darstellung eines zweiten Ausführungsbeispiels der erfindungsgemäßen Vorrichtung,
- Fig. 3: ein Beispiel einer Speicherorganisation zum Abspeichern von Bildinformationen,
- Fig. 4: eine beispielhafte Darstellung einer Zusammenstellung mehrerer Aufträge eines Kunden, die von verschiedenen Photofinishing-Laboren bearbeitet wurden, und
- Fig. 5: eine beispielhafte Darstellung einer Zusammenstellung mehrerer Kundenaufträge, die von einem einzigen Photofinishing-Labor bearbeitet wurden.

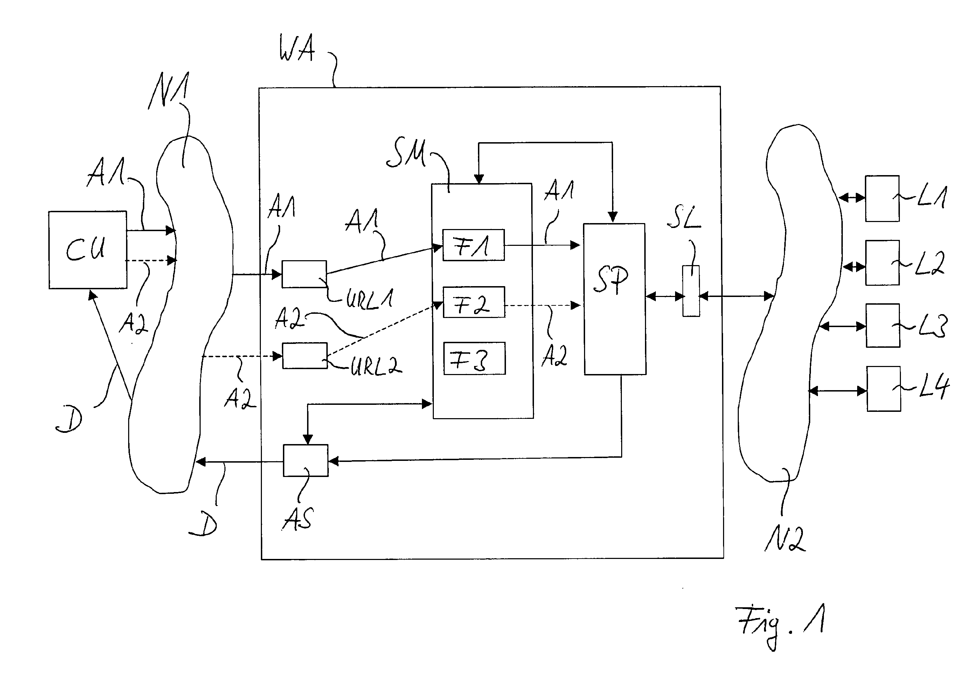

Fig. 1 zeigt das erste Ausführungsbeispiel der erfindungsgemäßen Vorrichtung. Die erfindungsgemäße Vorrichtung ist hier ein Web-Album WA und dient dazu, einer großen Anzahl von Kunden Bildinformationen über fotografische Aufträge, die diese Kunden bei Photofinishing-Laboren plaziert haben, bereitzustellen. Die Bildinformationen, die den Kunden zur Verfügung gestellt werden, sind dabei insbesondere digitale Bilddaten derjenigen Bilder, die Inhalt des jeweiligen fotografischen Auftrages sind. Die Bildinformationen, das heißt insbesondere die digitalen Bilddaten der Bilder des Auftrages, sind in einem Speicher SP des Web-Albums WA abgespeichert. Der Speicher SP hat eine sehr große Kapazität zum Abspeichern einer sehr großen Anzahl digitaler Bilddaten. Der Speicher SP kann eine Vielzahl von Servern enthalten, die beispielsweise auf einer großen Anzahl von Festplatten die digitalen Bilddaten abspeichern. Im Ausführungsbeispiel gemäß der Fig. 1 befindet sich in dem Web-Album WA ein zentraler Speicher SP. In dem Speicher SP speichern alle diejenigen Photofinishing-Labore, die mit dem Betreiber des Web-Albums zusammenarbeiten, die Bildinformationen ab, die den Aufträgen zugeordnet sind, die von den jeweiligen Photofinishing-Laboren verarbeitet wurden. Im vorliegenden Ausführungsbeispiel gemäß der Fig. 1 sind vier Photofinishing―Labore L1, L2, L3 und L4 dargestellt, die mit dem Web-Album WA zusammenarbeiten.

Die Fig. 1 zeigt beispielhaft einen Kunden CU, der bei einem oder mehreren der Photofinishing-Labore L1 - L4 ein oder mehrere fotografische Aufträge plaziert hat. Ein solcher fotografischer Auftrag kann beispielsweise ein fotografischer Negativfilm sein, der von dem ausgewählten Photofinishing-Labor L1 - L4 entwickelt und digital abgetastet wird, um so digitale Bilddaten der auf dem fotografischen Film enthaltenen Bilder zu erzeugen. Mittels der so erhaltenen digitalen Bilddaten kann das jeweilige Labor L1 - L4 beispielsweise fotografische Bilder mittels digitaler Printer herstellen. Diese fotografischen Bilder können dem Kunden CU beispielsweise per Post zugesandt werden. Alternativ oder zusätzlich werden die digitalen Bilddaten von dem ausgewählten Labor L1 - L4 dem Web-Album WA übermittelt und in dem Speicher SP abgespeichert. Den digitalen Bilddaten des jeweiligen Auftrages wird dabei eine spezielle Kennung zugeordnet. Mit dieser speziellen Kennung können die digitalen Bilddaten des Auftrages eindeutig identifiziert werden.

Der Kunde CU kann über ein erstes Netzwerk N1 auf das Web-Album WA zugreifen. Dazu besitzt der Kunde CU beispielsweise einen Computer mit dem er über das Internet eine Verbindung zu dem Web-Album WA aufbauen kann. In diesem Fall ist das Internet das erste Netzwerk N1. Zum Aufbau der Verbindung von dem Kunden CU zu dem Web-Album WA enthält das Web-Album WA mehrere Schnittstellen zu dem ersten Netzwerk N1. Im vorliegenden Ausführungsbeispiel gemäß der Fig. 1 enthält das Web-Album WA eine erste Schnittstelle URL1 und eine zweite Schnittstelle URL2. Es können aber auch weitere Schnittstellen im Web-Album vorhanden sein. Die beiden Schnittstellen URL1 und URL2 gehören zu einem ersten bzw. zweiten Empfangsmittel zum Empfangen von Anfragen zum Abrufen von Bildinformationen, die fotografischen Aufträgen zugeordnet sind, die von dem Kunden CU bei einem der Labore L1 - L4 plaziert wurden. Den Empfangsmitteln URL1 und URL2 sind unterschiedliche Netzwerkadressen zugeordnet, unter denen sie adressierbar sind. Abhängig davon, über welches Empfangsmittel URL1 oder URL2 der Kunde CU eine Verbindung zu dem Web-Album WA aufbauen möchte, gibt er in den Browser seines Computers die entsprechende Netzwerkadresse des gewünschten Empfangsmittels URL1 oder URL2 ein. Über das erste Netzwerk N1 wird dann eine Verbindung von dem Computer des Kunden CU zu dem jeweils angewählten Empfangsmittel URL1 oder URL2 aufgebaut. Die Photofinishing-Labore L1 - L4 sind an ein zweites Netzwerk N2 angeschlossen, über das Verbindungen von den Laboren L1 - L4 zu dem Web-Album WA aufgebaut werden können. Dazu enthält das Web-Album WA eine Schnittstelle SL zu dem zweiten Netzwerk N2.

Im vorliegenden Ausführungsbeispiel ist das Web-Album WA an das erste Netzwerk N1 und das zweite Netzwerk N2 angeschlossen. Die beiden Netzwerke N1 und N2 können ein und dasselbe Netzwerk sein, beispielsweise das Internet. Es ist aber ebenso möglich, insbesondere das zweite Netzwerk N2 als eigenständiges Intranet auszugestalten, so dass ein geschützter Datentransfer zwischen den Photofinishing-Laboren L1 - L4 und dem Web-Album WA möglich ist. Das zweite Netzwerk N2 sollte vorteilhafterweise so ausgestaltet sein, dass große Mengen mit hohen Datenraten übertragen werden können. Auf diese Weise kann gewährleistet werden, dass nach Fertigstellung der Verarbeitung der verschiedenen Aufträge in den Laboren L1 - L4 die digitalen Bilddaten der jeweiligen Aufträge sehr schnell von den Laboren L1 - L4 zu dem Web-Album WA übertragen werden können. An Stelle des zentralen Speichers SP zum Abspeichern aller Bildinformationen, die den von Laboren L1 - L4 verarbeiteten Aufträgen zugeordnet sind, kann in dem Web-Album WA ein anderer Speicher mit wesentlich geringerer Speicherkapazität als der Speicher SP vorgesehen sein. Dieser andere Speicher dient dann zum Zusammenstellen der Bildinformationen, die von dem Kunden CU angefragt werden. Es ist dann nicht notwendig, alle Bildinformationen aller Aufträge, die von den Laboren L1 - L4 verarbeitet wurden, in diesem anderen Speicher innerhalb des Web-Albums WA abzuspeichern. Die Abspeicherung dieser Bildinformationen kann dezentral in den jeweiligen Laboren L1 - L4 erfolgen. Dies bedeutet, dass die Labore L1 - L4 Speicher aufweisen, in denen sie die Bildinformationen abspeichern, die den von ihnen verarbeiteten Aufträgen zugeordnet sind. Zum Zusammenstellen der von dem Kunden CU angefragten Aufträge müssen dann die angefragten Bildinformationen kurzfristig von den Laboren L1 - L4 zu dem in dem Web-Album WA vorgesehenen anderen Speicher übermittelt werden.

Das Web-Album WA enthält ein Steuermittel SM, das die Verwaltung des Speichers SP und den Zugriff auf den Speicher SP steuert. Das Steuermittel SM setzt die von den Empfangsmitteln URL1 und URL2 empfangenen Kundenanfragen zum Abrufen von Aufträgen so um, dass auf die in dem Speicher SP abgespeicherten Bildinformationen, die den angefragten Aufträgen zugeordnet sind, zugegriffen werden kann. Dazu enthält das Steuermittel SM mehrere Filter, die bestimmte Bedingungen enthalten, die die Bildinformationen, auf die zugegriffen werden kann, näher spezifizieren. Im vorliegenden Ausführungsbeispiel gemäß der Fig. 1 enthält das Steuermittel ein erstes Filter F1, ein zweites Filter F2 und ein drittes Filter F3. Es ist möglich, dass das Steuermittel SM weitere Filter enthält. Das erste Filter F1 ist hier dem ersten Empfangsmittel URL1 und das zweite Filter F2 dem zweiten Empfangsmittel URL2 zugeordnet. Das bedeutet, dass alle von dem ersten Empfangsmittel URL1 empfangenen Kundenanfragen an das erste Filter F1 und alle von dem zweiten Empfangsmittel URL2 empfangenen Kundenanfragen an das zweite Filter F2 weitergeleitet werden. Dazu ist das erste Empfangsmittel URL1 mit dem ersten Filter F1 und das zweite Empfangsmittel URL2 mit dem zweiten Filter F2 verbunden. Das dritte Filter F3 kann beispielsweise mit einem weiteren Empfangsmittel des Web-Albums WA verbunden sein, das in der Fig. 1 nicht dargestellt ist.

Im ersten Ausführungsbeispiel gemäß der Fig. 1 übermittelt der Kunde CU eine erste Anfrage A1 und eine zweite Anfrage A2 zum Abrufen von fotografischen Aufträgen an das Web-Album WA. Für die erste Anfrage A1 wählt er im Browser seines Computers die Adresse des ersten Empfangsmittels URL1 des Web-Album WA. Über das erste Netzwerk N1 wird dann eine Verbindung von dem Kunden CU zu dem ersten Empfangsmittel URL1 aufgebaut. Die Anfrage A1 kann beispielsweise die der Angabe einer bestimmten Kennung eines bestimmten fotografischen Auftrages enthalten. Diese Kennung wurde dem Kunden CU zuvor entweder von dem Labor L1 - L4, das den fotografischen Auftrag verarbeitet hat, oder von dem Web-Album WA mitgeteilt. Dieses Mitteilen der Kennung des fotografischen Auftrages kann beispielsweise per Email erfolgen. An Stelle oder zusätzlich zu der Eingabe einer speziellen Kennung für einen bestimmten fotografischen Auftrag kann der Kunde CU bei der Übermittlung der Anfrage A1 an das Web-Album WA auch seine persönliche Benutzer-Kennung eingeben.

Das erste Empfangsmittel URL1 und das erste Filter F1 sind hier der Gesamtheit der an das Web-Album WA angeschlossenen Photofinishing-Labore L1 - L4 zugeordnet. Das bedeutet, dass dem Kunden CU, der das erste Empfangsmittel URL1 anwählt, Bildinformationen von dem Web-Album WA bereitgestellt werden, die allen Aufträgen zugeordnet sind, die der Kunde CU bei einem der an das Web-Album WA angeschlossenen Labore L1 - L4 plaziert hat. Das Filter F1 ist damit so konfiguriert, dass es Bedingungen enthält, mittels derer auf Bildinformationen aller in dem Speicher SP abgespeicherten Aufträge des Kunden CU durch das Steuermittel SM zugreifen kann. Eine Auswahl von Aufträgen, die nur von bestimmten der Labore L1 - L4 verarbeitet wurden, erfolgt bei Zugriff auf den Speicher SP mittels des ersten Filters F1 nicht.

Bei der zweiten Anfrage A2 baut der Kunde CU eine Verbindung zu dem zweiten Empfangsmittel URL2 auf. Dieses zweite Empfangsmittel URL2 ist hier einem einzigen der an das Web-Album WA angeschlossenen Labore L1 - L4 zugeordnet. Im vorliegenden Ausführungsbeispiel sind das zweite Empfangsmittel URL2 und das Filter F2 dem zweiten Labor L2 zugeordnet. Das Filter F2 enthält daher solche Bedingungen, dass das Steuermittel SM bei Empfangen der Anfrage A2 durch das zweite Empfangsmittel URL2 auf in dem Speicher SP abgespeicherte Bildinformationen solcher Aufträge zugreift, die für den Kunden CU von dem zweiten Labor L2 verarbeitet wurden. Die für den Kunden CU von den anderen Laboren L1, L3 und L4 verarbeiteten Aufträge werden dann nicht bereitgestellt.

Das Steuermittel SM steuert die Zusammenstellung der bereitzustellenden Bildinformationen und deren Ausgabe über die Ausgabeschnittstelle zu dem Kunden CU. Zum Bereitstellen der Bildinformationen, auf die das Steuermittel SM auf Grund der Anfrage A1 oder A2 zugegriffen hat, enthält das Web-Album WA eine Ausgabeschnittstelle AS, die mit dem ersten Netzwerk N1 verbunden ist. Die bereitgestellten Bildinformationen können dem Kunden CU daher über das Netzwerk N1 von der Ausgabeschnittstelle AS des Web-Albums WA über eine aufgebaute Verbindung D übermittelt werden.

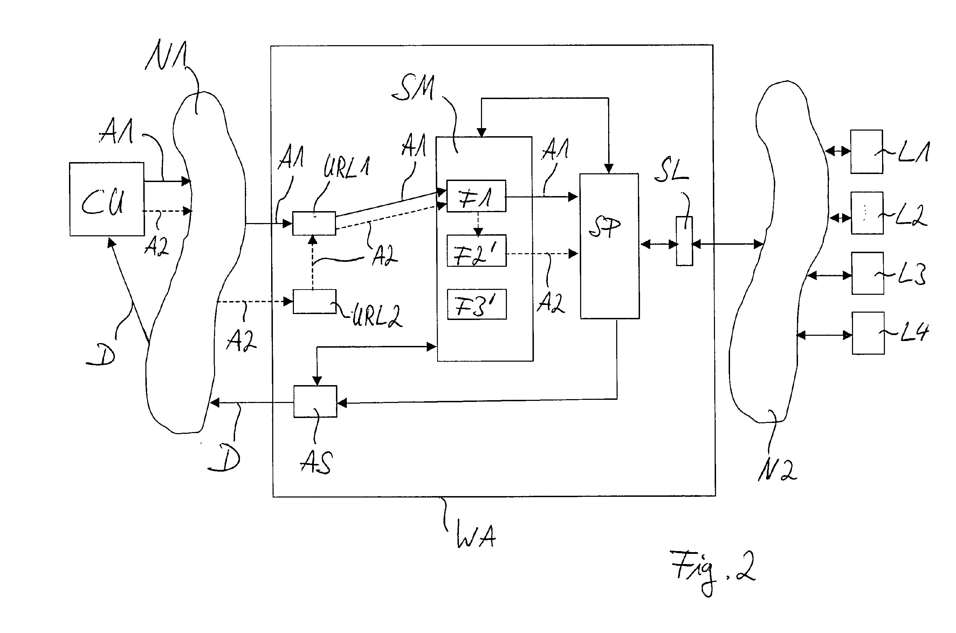

Fig. 2 zeigt die schematische Darstellung des zweiten Ausführungsbeispiels des erfindungsgemäßen Web-Albums WA. Der Aufbau des Web-Albums WA gemäß des zweiten Ausführungsbeispiels entspricht weitgehend demjenigen des ersten Ausführungsbeispiels. Allerdings ist die Weiterleitung der zweiten Anfrage A2 innerhalb des Web-Albums WA anders realisiert. Auch der Aufbau der Filter, die zum Zugreifen auf bestimmte Bildinformationen des Speichers SP eingesetzt werden, ist innerhalb des Steuermittels SM des Web-Albums WA gemäß des zweiten Ausführungsbeispiels anders gestaltet. An Stelle der Filters F2 und F3 des ersten Ausführungsbeispiels enthält das Steuermittel SM im zweiten Ausführungsbeispiel die Filter F2' und F3'.

Der Aufbau des Filters F1 entspricht im zweiten Ausführungsbeispiel weitgehend dem Aufbau, wie er im ersten Ausführungsbeispiel realisiert ist. Das Filter F1 enthält auch hier solche Bedingungen, die einen Zugriff auf all diejenigen Bildinformationen zuläßt, die den Aufträgen des Kunden CU zugeordnet sind. Das heißt, das Filter F1 filtert alle diejenigen Bildinformationen heraus, die in dem Speicher SP abgespeichert sind und solchen Aufträgen zugeordnet sind, die von anderen Kunden, und nicht dem Kunden CU, bei den Photofinishing-Laboren L1 - L4 plaziert wurden.

Im Gegensatz zum ersten Ausführungsbeispiel, bei dem das Filter F2 die Bedingungen des Filters F1 umfasst, enhält das Filter F2' des Steuermittels SM des zweiten Ausführungsbeispiels nur solche Bedingungen, die ein Herausfiltern von Bildinformationen ermöglichen, die von einem bestimmten Photofinishing-Labor, das heißt hier dem Labor L2, verarbeitet wurden. Entsprechendes gilt für das Filter F3', das einem anderen einzelnen Photofinishing-Labor zugeordnet ist, beispielsweise dem Labor L3.

Wird gemäß des zweiten Ausführungsbeispiels eine von dem Kunden CU an das Web-Album WA gerichtete zweite Anfrage A2 von dem zweiten Empfangsmittel URL2 empfangen, so leitet das zweite Empfangsmittel URL2 diese zweite Anfrage A2 an das erste Empfangsmittel URL1 weiter. In dem Web-Album WA des zweiten Ausführungsbeispiels ist somit eine generelle Weiterleitung aller Anfragen, die an dem zweiten Empfangsmittel URL2 ankommen, an das erste Empfangsmittel URL1 implementiert. Das zweite Empfangsmittel URL2 hat insofern keine eigene Verbindung zu dem Steuermittel SM, um diesem die Anfragen, die von dem zweiten Empfangsmittel URL2 empfangen werden, zuzuführen. Die Zuführung der an das Web-Album WA gerichteten Anfragen zum Abrufen von Aufträgen werden dem Steuermittel SM ausschließlich von dem ersten Empfangsmittel URL1 zugeleitet. Alle Anfragen A1 und A2 durchlaufen dann das erste Filter F1, durch das alle Aufträge bestimmt werden, die von dem Kunden CU bei einem der Labore L1 - L4 plaziert wurden. Die direkt an das erste Empfangsmittel URL1 gerichtete erste Anfrage A1 durchläuft ausschließlich das erste Filter F1, so dass dem Kunden CU auf Grund seiner ersten Anfrage A1 Bildinformationen aller seiner Aufträge bereitgestellt werden können, die von den Laboren L1 - L4 verarbeitet wurden. Die zweite Anfrage A2 wird nach Durchlaufen des ersten Filters F1 zusätzlich an das Filter F2' weitergeleitet. Dies bewirkt, dass zusätzlich zu den durch das Filter F1 bestimmten Bildinformationen, alle Aufträge des Kunden CU durch das Filter F2' diejenigen Bildinformationen von Aufträgen ausgewählt werden, die von dem zweiten Labor L2 verarbeitet wurden. Insofern ist hier die Kombination der Filter F1 und F2' dem zweiten Labor L2 zugeordnet. Das Filter F1 ist, wie bereits im ersten Ausführungsbeispiel, der Gesamtheit der Labore L1 - L4 zugeordnet.

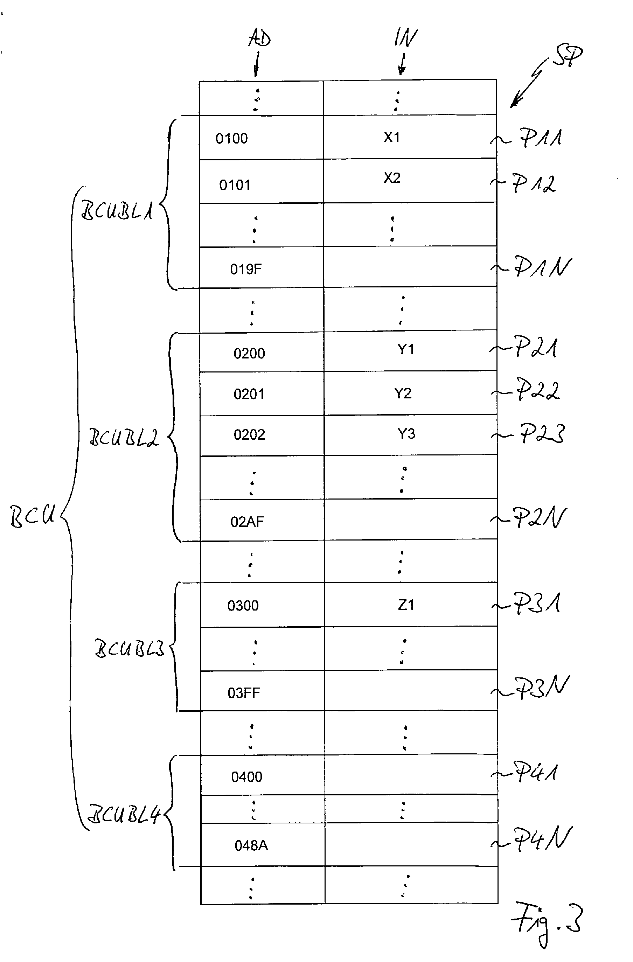

Die Fig. 3 zeigt ein Beispiel einer Organisation des Speichers SP, wie er innerhalb eines Web-Albums WA gemäß des ersten oder zweiten Ausführungsbeispiels eingesetzt werden kann. Der Speicher SP gemäß der Fig. 3 enthält hier zwei Speicherbereiche, die in der Fig. 3 spaltenförmig nebeneinander angeordnet sind. In einem ersten Speicherbereich AD sind Speicheradressen enthalten. Ein zweiter Speicherbereich IN enthält Bildinformationen, die bestimmten Aufträgen zugeordnet sind. Die Bildinformationen sind in einzelnen Felder des zweiten Speicherbereichs IN abgespeichert. Im Beispiel gemäß der Fig. 3 ist einem ersten Feld P11 die Adresse 0100 zugeordnet. In dem ersten Feld P11 sind Bildinformationen abgespeichert, die einen ersten Auftrag X1 zugeordnet sind. Einem zweiten Feld P12 ist eine Adresse 0101 zugeordnet. In dem zweiten Feld P12 sind Bildinformationen eines zweiten Auftrages X2 abgelegt. Einem Feld P1N ist eine Adresse 019F zugeordnet. Dieses Feld ist leer und nicht mit Bildinformationen eines Auftrages belegt. In einem weiteren Feld P21 sind Bildinformationen eines Auftrages Y1 abgespeichert. In diesem Feld P21 ist die Speicheradresse 0200 zugeordnet. In einem Feld P22 sind Bildinformationen eines weiteren Auftrages Y2. Diesem Feld P22 ist die Speicheradresse 0201 zugeordnet. In einem Feld P23 sind Bildinformationen eines Auftrages Y3 abgespeichert. Dem Feld P23 ist eine Speicheradresse 0202 zugeordnet. Ein Feld P2N ist nicht mit Bildinformationen eines Auftrages belegt. Dem Feld P2N ist die Speicheradresse 02AF zugeordnet. Einem Feld P31 ist die Speicheradresse 0300 zugeordnet. In diesem Feld P31 sind Bildinformationen eines Auftrages Z1 abgespeichert. Ein Feld P3N ist wiederum leer und enthält keine Bildinformationen. Diesem Feld P3N ist die Speicheradresse 03FF zugeordnet. Einem Feld P41 ist die Speicheradresse 0400 und einem Feld P4N die Speicheradresse 048A zugeordnet. Beide Felder P41 und P48A sind leer und enthalten keine Bildinformationen. Der Speicher SP gemäß des Beispiels der Fig. 3 enthält eine Vielzahl weiterer Felder, die in der Fig. 3 nicht näher angegeben sind. Beispielsweise sind zwischen den Felder P12 und P1N, sowie zwischen den Feldern P23 und P2N, den Feldern P31 und P3N und den Feldern P41 und P4N Felder vorhanden, denen jeweils eigene Speicheradressen zugeordnet sind.

Der Speicher SP ist so organisiert, dass bestimmte Felder, die möglichst innerhalb des Speichers SP direkt nebeneinander angeordnet sind, bestimmten Kunden, das heißt hier insbesondere dem Kunden CU, und bestimmten Photofinishing-Laboren L1 - L4 zugeordnet sind. Das heißt, diese Felder sind für die jeweiligen Kunden und die jeweiligen Labore reserviert. Im vorliegenden Beispiel gemäß der Fig. 3 sind die Felder, die den Speicheradressen 0100 - 019F zugeordnet sind, dem Kunden CU und dem ersten Labor L1 zugeordnet. Die Felder, die zu den Speicheradressen 0200 - 02AF gehören, sind dem Kunden CU und dem zweiten Labor L2 zugeordnet. Die Felder mit den Speicheradressen 0300 - 03FF sind dem Kunden CU und dem dritten Labor L3 und die Felder mit den Speicheradressen 0400 - 048A sind dem Kunden CU und dem vierten Labor L4 zugeordnet. Das heißt, in den Feldern, die dem Kunden CU und dem ersten Labor L1 zugeordnet sind, werden solche Bildinformationen abgespeichert, die Aufträgen zugeordnet sind, die von dem Kunden CU bei dem ersten Labor L1 plaziert wurden. In denjenigen Feldern, die dem Kunden CU und dem Labor L2 zugeordnet sind, werden solche Bildinformationen abgespeichert, die von dem Kunden CU bei dem zweiten Labor L2 plaziert wurden. Die Felder des Speichers SP die dem Kunden CU und dem dritten Labor L3 zugeordnet sind, werden zum Abspeichern von Bildinformationen verwendet, die Aufträgen zugeordnet sind, die von dem Kunden CU bei dem dritten Labor L3 plaziert wurden. Und in denjenigen Feldern, die dem Kunden CU und dem Labor L4 zugeordnet sind, werden solche Bildinformationen abgespeichert, die von dem Kunden CU bei dem vierten Labor L4 plaziert wurden.

Auf die in den erstgenannten Feldern abgespeicherten Informationen kann über eine Bedingung BCUBL1 zugegriffen werden. Auf die in den zweitgenannten Feldern abgespeicherten Bildinformationen kann über eine Bedingung BCUBL2 zugegriffen werden. Auf die in den drittgenannten Feldern abgespeicherten Bildinformationen kann über eine Bedingung BCUBL3 zugegriffen werden. Auf die viertgenannten Felder, die dem Kunden CU und dem vierten Labor L4 zugeordnet sind, kann mittels einer Bedingung BCUBL4 zugegriffen werden. Alle Felder, in denen Bildinformationen von Aufträgen des Kunden CU abgespeichert sind, können über eine Bedingung BCU erreicht werden. Um daher auf alle Bildinformationen von Aufträgen des Kunden CU zugreifen zu können, enthält das Filter F1 die Bedingung BCU. Der Zugriff auf alle Bildinformationen, die Aufträgen des Kunden CU zugeordnet sind, die dieser bei dem zweiten Labor L2 plaziert hat, erfolgt über die Bedingung BCUBL2. Im Falle des ersten Ausführungsbeispieles, in dem das Filter F2 direkt von dem zweiten Empfangsmittel URL2 angesteuert wird, enthält das Filter F2 daher die Bedingung BCUBL2. Im Falle des zweiten Ausführungsbeispiels, in dem die Anfrage A2 zunächst über das Filter F1 und anschließend über das Filter F2' läuft, enthält das Filter F2' die Bedingung BL2. Die Kombination der Filter 1 und F2' gemäß des zweiten Ausführungsbeispiels führt daher zu der Gesamtbedingung BCUBL2.

Einfachheitshalber können die Felder mit den bereitzustellenden Bildinformationen über Zeiger, die auf die entsprechenden Speicheradressen zeigen, angesteuert werden. Die Filter des Steuermittels SM können daher solche Zeiger enthalten. Bei Durchlaufen des Filters F2 des ersten Ausführungsbeispiels greift das Steuermittel SM daher auf die Speicheradressen 0200 - 02AF zu, in denen Bildinformationen von Aufträgen des Kunden CU abgespeichert sein können, die Aufträgen zugeordnet sind, die dieser bei dem zweiten Labor L2 plaziert hat.

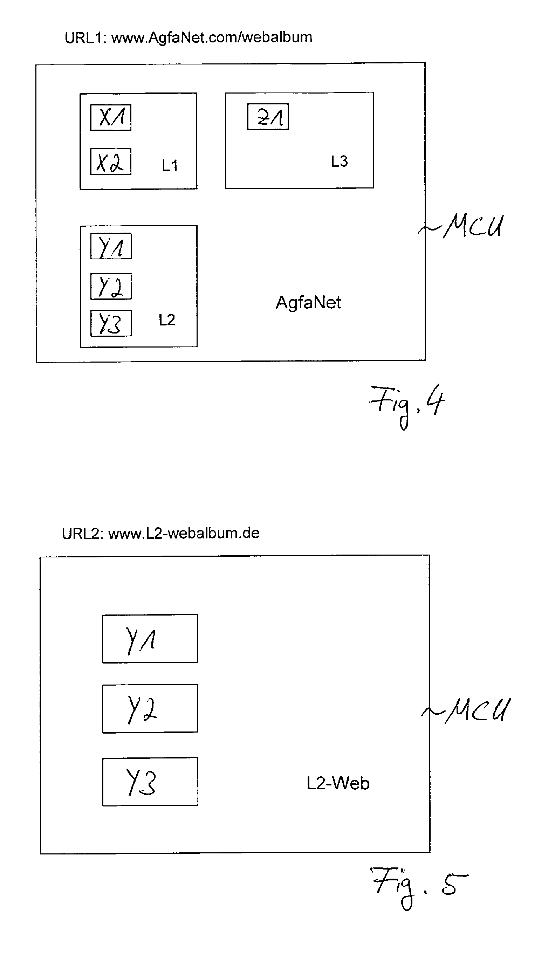

Fig. 4 zeigt eine beispielhafte Darstellung einer von dem Steuermittel SM des Web-Albums WA durchgeführten Zusammenstellung mehrerer Aufträge des Kunden CU, die von den Laboren L1, L2 und L3 bearbeitet wurden. Die Zusammenstellung gemäß der Fig. 4 wurde dem Kunden CU über das erste Netzwerk N1 und die Ausgabeschnittstelle AS des Web-Albums WA übermittelt. Die Zusammenstellung wird hier auf einem Monitor MCU des Kunden dargestellt. Sie wurde auf Grund der Anfrage A1 des Kunden CU fertiggestellt. Der Kunde CU übermittelte dazu die Anfrage A1 an das erste Empfangsmittel URL1 des Web-Albums WA. Dazu gab der Kunde die Adresse des ersten Empfangsmittels URL1 in den Browser seines Computers ein. Die Adresse des ersten Empfangsmittels URL1 ist im Beispiel gemäß der Fig. 4 www.Agfanet.com/web-album. Dadurch wurde eine Verbindung zu dem Web-Album WA aufgebaut.

Nach Eingabe der speziellen Benutzer-Kennung des Kunden CU durchlief die Anfrage A1 das Filter F1. Das Steuermittel SM konnte daraufhin auf den Speicher SP zugreifen und die Bildinformationen all derjenigen Aufträge bestimmen, die von dem Kunden CU bei einem der Labore L1 - L4 plaziert wurden. Im vorliegenden Beispiel sind dies die Bildinformationen der Aufträge X1 und X2, die von dem ersten Labor L1 verarbeitet wurden. Des Weiteren die Bildinformationen der Aufträge Y1, Y2 und Y3, die von dem zweiten Labor L2 verarbeitet wurden. Weiterhin bestimmte das Steuermittel SM die Bildinformationen des Auftrages Z1, der von dem dritten Labor L3 verarbeitet wurde. Die von den verschiedenen Laboren L1, L2 und L3 erzeugten Bildinformationen der verschiedenen Aufträge sind in der Zusammenstellung gemäß der Fig. 4 entsprechend der Labore geordnet dargestellt. Die Bildinformationen können beispielsweise spezifische Titel oder Bezeichnungen der jeweiligen Aufträge sein. Es ist auch möglich, dass sogenannte Thumbnails in der Zusammenstellung dargestellt sind. Solche Thumbnails sind niedrigaufgelöste Wiedergaben der in dem jeweiligen Auftrag enthaltenen Bilder. Es können dem Kunden CU beispielsweise alle in dem Auftrag enthaltenen Bilder in niedrigaufgelöster Weise übermittelt werden. Ebenso ist es denkbar, dem Kunden direkt die vollständigen hochaufgelösten digitalen Bilddaten der in dem Auftrag enthaltenen Bilder zu übermitteln.

Der Kunde CU kann nach Übermittlung der Zusammenstellung bestimmte Bilder oder einen kompletten Satz aller Bilder eines Auftrages bestimmen, von denen in einem der Photofinishing-Labore fotografische Bilder in Form von Abzügen hergestellt werden sollen. Auf diese Weise kann der Kunde einen neuen Auftrag zusammenstellen, der dann über das Web-Album WA einem der Photofinishing-Labore L1 - L4 zur Herstellung der fotografischen Bilder übermittelt wird. Vorteilhafterweise ist es dabei möglich, dass der Kunde aus verschiedenen Aufträgen Bilder auswählt und diese zu einem neuen Auftrag zusammenstellt. Die ausgewählten Bilder können dabei durchaus auch von Aufträgen stammen, die zuvor bei verschiedenen Laboren plaziert wurden. Beispielsweise kann ein Bild des Auftrages X1, der beim Labor L1 plaziert wurde, mit einem Bild des Auftrages Y2, der beim Labor L2 plaziert wurde, zu einem neuen Auftrag kombiniert werden. Dieser neue Auftrag würde dann zum Web-Album WA übermittelt. Das Web-Album WA könnte dann die Bestellung der Bilder, die von verschiedenen Aufträgen stammen in verschiedene Teilaufträge aufteilen. Dies bedeutet beispielsweise, dass das Bild des neuen Auftrages, das aus dem Auftrag X1 stammt, an das Labor L1 geschickt wird. Das Bild des neuen Auftrages, das aus dem Auftrag Y2 entstammt, wird an das Labor L2 geschickt. Alternativ ist es aber ebenso möglich, dass das Web-Album den vollständigen neuen Auftrag an eines der Photofinishing-Labore L1 - L4 weiterleitet, damit dieses den vollständigen Auftrag abarbeiten kann. Das Labor, an das der neue Auftrag weitergeleitet wird, kann dabei von dem Kunden CU vorgegeben werden. Zur gemeinsamen Verarbeitung des Auftrages in einem Labor ist es unter Umständen nötig, je nach Abspeicherung der vollständigen Bilddaten der einzelnen Bilder des neuen Auftrages, Bilddaten einzelner Bilder zu dem Labor zu übertragen, die in anderen Laboren oder im Speicher des Web-Albums abgelegt sind.

Fig. 5 zeigt eine weitere beispielhafte Darstellung einer Zusammenstellung mehrerer Aufträge des Kunden CU. Die Zusammenstellung gemäß der Fig. 5 enthält dabei ausschließlich Bildinformationen derjenigen Aufträge, die von dem zweiten Labor L2 verarbeitet wurden. Der Kunde CU hat dazu die Anfrage A2 an das zweite Empfangsmittel URL2 des Web-Albums WA übermittelt. Dazu hat er die Netzwerkadresse www.L2-Web-Album.de gewählt, die dem zweiten Empfangsmittel URL2 zugeordnet ist. Wie zuvor beschrieben, bestimmt das Steuermittel SM mittels des Filters F2 (erstes Ausführungsbeispiel) oder der Kombination der Filter F1 und F2' (zweites Ausführungsbeispiel) die Bildinformationen derjenigen Aufträge, die der Kunde CU zuvor bei dem zweiten Labor L2 plaziert hat. Dies sind im vorliegenden Fall die Bildinformationen der Aufträge Y1, Y2 und Y3.

Die Zusammenstellung gemäß der Fig. 5 wird dem Kunden CU über die Ausgabeschnittstelle AS und das erste Netzwerk N1 übermittelt. Die Zusammenstellung kann dann auf dem Monitor MCU des Computers des Kunden CU dargestellt werden. Wie bereits im Zusammenhang mit dem Beispiel der Fig. 4 beschrieben, kann der Kunde bestimmte Bilder der Aufträge Y1 - Y3 auswählen und diese zu einem neuen Auftrag zusammenstellen, der dann über das Web-Album WA an eines der Labore L1 - L4 zur Herstellung von fotografischen Bildern übermittelt wird.

Hierzu 4 Blatt Zeichnungen

## Patentansprüche

1. Vorrichtung (WA) zum Bereitstellen von Bildinformationen, die mehreren Aufträgen (X1, X2, Y1, Y2, Y3, Z1) eines Kunden (CU) zugeordnet sind, über ein Netzwerk (N1, N2) mit
- einem Speichermittel (SP) zum Speichern der Bildinformationen der Aufträge (X1, X2, yl, Y2, Y3, Z1),
- einem ersten Empfangsmittel (URL1) zum Empfangen einer Anfrage (A1) zum Abrufen wenigstens eines Auftrages (X1, X2, Y1, Y2, Y3, Z1), wobei dem ersten Empfangsmittel (URL1) eine erste Netzwerkadresse zugeordnet ist, und
- einem Steuermittel (SM) zum Zugreifen auf erste Bildinformationen auf Grund der von dem ersten Empfangsmittel (URL1) empfangenen Anfrage (A1),
**dadurch gekennzeichnet, dass**
- ein zweites Empfangsmittel (URL2) zum Empfangen einer Anfrage (A2) zum Abrufen wenigstens eines Auftrages (X1, X2, Y1, Y2, Y3, Z1) vorhanden ist, wobei dem zweiten Empfangsmittel (URL2) eine zweite Netzwerkadresse zugeordnet ist,
- das Steuermittel (SM) so ausgestaltet ist, dass es auf Grund der von dem zweiten Empfangsmittel (URL2) empfangenen Anfrage (A2) auf zweite Bildinformationen zugreift, und
- die ersten Bildinformationen die zweiten Bildinformationen umfassen.

2. Vorrichtung nach Anspruch 1, **dadurch gekennzeichnet, dass** die Vorrichtung insbesondere über das Netzwerk (N1, N2) mit mehreren Bildverarbeitungseinrichtungen (L1-L4) zum Verarbeiten von Aufträgen (X1, X2, Y1, Y2, Y3, Z1) des Kunden (CU) verbunden ist.

3. Vorrichtung nach Anspruch 2, **dadurch gekennzeichnet, dass** das erste Empfangsmittel (URL1) den mehreren Bildverarbeitungseinrichtungen (L1-L4) und das zweite Empfangsmittel (URL2) einer der mehreren Bildverarbeitungseinrichtungen (L2) zugeordnet ist.

4. Vorrichtung nach Anspruch 2 oder 3, **dadurch gekennzeichnet, dass** Bildinformationen, die mehreren Aufträgen (X1, X2, Y1, Y2, Y3, Z1) zugeordnet sind, die von verschiedenen Bildverarbeitungseinrichtungen (L1-L4) verarbeitet wurden, in einem gemeinsamen Speichermittel (SP) abgespeichert sind.

5. Vorrichtung nach einem der vorhergehenden Ansprüche, **dadurch gekennzeichnet, dass** das Steuermittel (SM) ein erstes Abrufmittel (F1) zum Abrufen von in dem Speichermittel (SP) abgespeicherten Bildinformationen mittels erster Bedingungen (BCU) und ein zweites Abrufmittel (F2; F1, F2) zum Abrufen von in dem Speichermittel (SP) abgespeicherten Bildinformationen mittels zweiter Bedingungen (BCUBL1, BCUBL2, BCUBL3) aufweist, und das erste Abrufmittel (F1) dem ersten Empfangsmittel (URL1) und das zweite Abrufmittel (F2) dem zweiten Empfangsmittel (URL2) zugeordnet ist.

6. Vorrichtung nach Anspruch 5, **dadurch gekennzeichnet, dass** die zweiten Bedingungen (BCUBL1, BCUBL2, BCUBL3) die ersten Bedingungen (BCU) umfassen.

7. Vorrichtung nach Anspruch 5 oder 6, **dadurch gekennzeichnet, dass** die ersten Bedingungen (BCU) und die zweiten Bedingungen (BCUBL1, BCUBL2, BCUBL3) Zeiger aufweisen, die bestimmten Adressen (AD) des Speichermittels (SP) zugeordnet sind.

8. Verfahren zum Bereitstellen von Bildinformationen, die mehreren Aufträgen (X1, X2, Y1, Y2, Y3, Z1) eines Kunden (CU) zugeordnet sind, über ein Netzwerk (N1, N2), bei dem
- die Bildinformationen der Aufträge (X1, X2, Y1, Y2, Y3, Z1) in einem Speichermittel (SP) gespeichert werden,
- eine Anfrage (A1) zum Abrufen wenigstens eines Auftrages (X1, X2, Y1, Y2, Y3, Z1) von einem ersten Empfangsmittel (URL1) empfangen wird, wobei dem ersten Empfangsmittel (URL1) eine erste Netzwerkadresse zugeordnet ist, und
- auf erste Bildinformationen auf Grund der von dem ersten Empfangsmittel (URL1) empfangenen Anfrage (A1) mittels eines Steuermittels (SM) zugegriffen wird,
**dadurch gekennzeichnet, dass**
- eine Anfrage (A2) zum Abrufen wenigstens eines Auftrages (X1, X2, Y1, Y2, Y3, Z1) mittels eines zweiten Empfangsmittels (URL2) empfangen wird, wobei dem zweiten Empfangsmittel (URL2) eine zweite Netzwerkadresse zugeordnet ist,
- auf Grund der von dem zweiten Empfangsmittel (URL2) empfangenen Anfrage (A2) mittels des Steuermittels (SM) auf zweite Bildinformationen zugegriffen wird, und
- die ersten Bildinformationen die zweiten Bildinformationen umfassen.
